Europäisches Patentamt

European Patent Office

Office européen des brevets

(11) Publication number : **0 170 396**
**B1**

# EUROPEAN PATENT SPECIFICATION

(45) Date of publication of patent specification :
19.10.88

(51) Int. Cl.⁴ : **C 22 C 1/09, B 22 F 3/26**

(21) Application number : 85304531.8

(22) Date of filing : 25.06.85

(54) Method of manufacturing short inorganic fiber-reinforced metal composites.

(30) Priority : 25.06.84 JP 130793/84

(43) Date of publication of application :
05.02.86 Bulletin 86/06

(45) Publication of the grant of the patent :
19.10.88 Bulletin 88/42

(84) Designated contracting states :
CH DE FR GB IT LI

(56) References cited :
EP-A- 0 108 281
GB-A- 2 089 410
US-A- 3 529 655

(73) Proprietor : MITSUBISHI ALUMINIUM KABUSHIKI
KAISHA
No. 5-1, Ohtemachi 1-chome
Chiyoda-ku Tokyo (JP)

(72) Inventor : Watanabe, Hideo
No. 327-4, Shige
Numazu-shi Shizuoka-ken (JP)
Inventor : Ohori, Koichi
No. 82-1, Inari
Susono-shi Shizuoka-shi (JP)
Inventor : Takeuchi, Yo
No. 67-7, Futatsuya
Susono-shi Shizuoka-ken (JP)

(74) Representative : Ben-Nathan, Laurence Albert et al
Urquhart-Dykes & Lord 91 Wimpole Street
London W1M 8AH (GB)

## Description

This invention relates to a method of manufacturing short inorganic fiber-reinforced metal composites, and more particularly to a method of manufacturing high-strength short inorganic fiber-reinforced metal composites in which short inorganic fibers are evenly dispersed in the matrix metal, in a state free of breakage and damage.

In recent years, metal composites in which short fibers of inorganic materials such as SiC, $Si_3N_4$ and $Al_2O_3$ in the form of whiskers or the like are dispersed in the matrix metal such as aluminium, an alloy thereof, magnesium, and an alloy thereof have been employed to an increasing extent as component parts of wings and fuselages of airplanes, bodies and engines of cars, audio systems, buildings, etc. by virtue of their high strength and light weight.

A typical conventional method of manufacturing such short inorganic fiber-reinforced metal composites comprises pouring short inorganic fibers into a molten metal as a matrix, agitating the fibers and molten metal so that the fibers are evenly dispersed throughout the molten metal, and charging the fiber-dispersed molten metal into a mold having a cavity of a predetermined shape, and solidifying the fiber-dispersed molten metal within the mold.

However, according to the conventional method, it is difficult to disperse the inorganic fibers homogeneously in the matrix metal, since they can be separated from the molten metal and rise to the surface mainly due to their low wettability. Further, inorganic fibers can be broken or damaged during agitation, making it difficult to obtain high-strength metal composites in which the distribution of inorganic fibers is very homogeneous and the bonding between inorganic fibers and the matrix metal is quite strong.

EP-A-0108281 discloses a method of manufacturing a fibre-reinforced metal composite material comprising the steps of dispensing silicon carbide whiskers in an aqueous solution of silica binder, drying resulting mixture and firing it to create a porous pre-form, placing the pre-form in a mould cavity, filling the cavity with molten metal and imposing pressure on the molten metal to cause the metal to penetrate the porous preform.

GB-A-2089410 describes a method of making a composite structure such as a gas turbine component by laying up sheets of resin-impregnated ceramic fibres on a former, firing the thus-formed structure within a mould thereby burning off the resin, and castring a metal eg aluminium or magnesium around the fibres within the mould.

According to the present invention there is provided a method of manufacturing a fiber-reinforced metal composite, comprising the steps of :

(a) blending together an aqueous solution of a high polymer binder and inorganic fibers with lengths in a range of from 10 to $10^4$ μm ;

(b) charging the resulting blend into a water-absorbent former having a cavity of a desired shape ;

(c) soaking said charged blend in said former to dehydrate the blend and couvert the blend into a porous pre-form ;

(d) preheating said porous pre-form to completely remove said high polymer binder therefrom ;

(e) establishing around said preheated porous pre-form a mold having a cavity of a desired shape ;

(f) charging a molten metal into said mold cavity ;

(g) applying immediate pressure to said molten metal to cause said molten metal to penetrate into said pre-form ; and

(h) reducing the temperature of the pre-form to cause said molten metal to solidify under pressure.

Under the aforementioned circumstances, the Applicants have made studies in order to obtain short inorganic fiberreinforced metal composites which are homogeneous in distribution of inorganic fibers and high in strength, to reach the following findings :

(1) If short inorganic fibers are mixed into an aqueous solution of a high polymer binder such as ethylene oxide polymer, water soluble urethane, polyvinyl alcohol (PVA), methylcellulose (MC), carboxymethyl-cellulose (CMC), and nitrocellulose, and the fibers and solution are agitated, a mixed solution can be formed with ease, in with the short inorganic fibers are homogeneously dispersed through the aqueous solution ;

(2) If the mixed solution is then charges into a water-absorbent form having a cavity of a predetermined shape and formed of gypsum or $CaCl_2$ and then soaked in the form for a suitable period of time to be dehydrated and dried within the form, by a dryer if required, a porous pre-form can be obtained in which the short inorganic fibers are homogeneously dispersively distributed ;

(3) If the porous pre-form is preheated to a temperature of 400 to 800 °C so as to have the high polymer binder completely removed therefrom, immediately after it is removed from the form, or if required, after it is sintered at a predetermined temperature of 800 to 1 500 °C after removal from the form, and then set into a mold having a cavity of a predetermined shape, and a molten fetal is charged into the mold, if required, after the interior of the mold with the porous pre-form therein is reduced in pressure to the order of 0.133 Pa ($10^{-3}$ torr), immediately followed by applying pressure of from 1.98 to $1.47 \times 10^7$ N/m 200 to 1 500 kg/cm²) to the molten metal within the mold, the molten metal completely infiltrates pores in the porous pre-form and unite with the short inorganic fibers ;

(4) Then, the molten metal is cooled unter the high pressure to become solidified. Therefore, according to the above method for manufacturing a short inorganic fiber-reinforced metal composite, no operation of agitating a molten metal and short inorganic fibers mixed therein is required as distinct from the conventional method, resulting in that the short inorganic fibers in the metal composite are free of breakage and damage. Further, according to the above manufacturing method, the molten metal is forcibly infiltrated into the porous pre-form under high pressure with the inorganic fibers homogeneously distributed therein, thereby achieving homogeneous distribution of the short inorganic fibers in the matrix metal and strong bonding between the short inorganic fibers and the metal matrix. The resulting metal composite is therefore highly homogeneous and has high strength ; and

(5) The short inorganic fiber-reinforced metal composite thus obtained can be subjected to conventional hot metal working such as hot extrusion, hot rolling, and hot forging after machining to a predetermined form.

The present invention is based upon the above findings. The method according to the invention comprises the aforementioned steps. The preferred scope of the invention can be defined as follows :

Kind of Short Inorganic Fibers : Whiskers of SiC or $Si_3N_4$ ;
Size of Fibers : $10^{-1} - 5 \times 10^2$ μm, preferably 0.1-10 μm,
$10$-$10^4$ μm, preferably 10-200 μm,
Mixed Solution
Drying Conditions : At room temperature to 300 °C for 1 to 48 hours ;
Bulk Density of Porous Pre-form : 0.16-0.59 g/cm$^3$ ;
Kind of Molten Metal : Al, Mg, or an alloy thereof ;
Temperature of Molten Metal : 650-850 °C ;
Volumetric Content of Short Inorganic Fibers in Metal Composite : 10-30 %, preferably 15-30 %

If required, the mixed solution may contain a surface active agent such as polyethylene glycol (PEG) and polyethylene oxide (PEO), a lubricant such as ester stearate and wax, and/or a plasticizer such as dioctyl phthalate (DOP), in suitable amounts.

An example of the method according to the invention will now be given hereinbelow.

## Example

Whiskers of SiC and whiskers of $Si_3N_4$ both having a size of 0.5-2 μm in diameter and 50-200 μm in length, as well as aqueous solutions of PVA of concentration of 2 % and aqueous solutions of MC of concentration of 4 % were prepared, as the short inorganic fibers and as the aqueous solution of high polymer binder, respectively. The short inorganic fibers and the aqueous solutions were blended in predetermined blending ratios as shown in Table, and agitated into mixed solutions by a mixer. The mixed solutions were each charged into a cylindrical cavity having a size of 80 mm in inner diameter and 80 mm in depth and formed within a form of gypsum as the water-absorbent form. Then, the mixed solutions were each soaked within the form for a period of 1 to 2 hours to be dehydrated, and then dried in a drier in a state charged in the form at a temperature of 80 °C for a period of 3 to 4 hours, to obtain porous pre-forms. The dried porous pre-forms were removed from the respective forms, and further dried in the drier to have moisture completely removed therefrom. Then, the porous pre-forms were preheated in an electric furnace at a temperature of 700 °C for 30 minutes to have the high polymer binders completely removed therefrom to make the infiltration of the molten metal into the pre-forms easy. The porous pre-forms thus in a preheated state were each set into a cavity having a size of 100 mm in inner diameter and 150 mm in depth and formed within a mold. Then, molten metals of aluminum alloys having chemical compositions equivalent to aluminum alloys numbered according to AA (the Aluminum Association) as shown in Table, and having been preheated to a temperature of 800 °C, were charged into the molds. Immediately after that, a pressure of $6.9 \times 10^2$ N/m$^2$ (700 kg/cm$^2$) was applied to molten metal within the molds, to cause the molten metal completely infiltrates into the porous pre-forms and completely unite with the short inorganic fibers forming the porous pre-form. Then, the molten metal is cooled to become solidified under the high pressure, to obtain short inorganic fiber-reinforced metal composites (hereinafter merely called « composites ») Nos. 1-6 of the invention.

Further, for the purpose of comparison, comparative short inorganic fiber-reinforced metal composites (hereinafter merely called « comparative composites ») Nos. 1-3 were manufactured by pouring whiskers the same as those used above into molten metals corresponding in chemical compositions to those used above and having been heated to a temperature of 800 °C, into blending ratios corresponding, respectively, to those of composite No. 1, No. 3, and No. 5, of the invention, agitating and mixing the whiskers and the molten metal by means of an agitator vane immersed in the molten metal at a rotational speed 300 r.p.m. for 30 minutes, charging the whisker-dispersed molten metal into a mold having a cavity of the same shape as used above, and cooling the fiber-dispersed molten metal to become solidified within the mold.

Next, the composites Nos. 1-6 of the invention and the comparative composites Nos. 1-3 were measured in respect of tensile strength, elongation, and Brinell hardness. The measurement results are shown in Table.

Table

| SPECIMEN | | CHEMICAL COMPOSITION OF MIXED SOLUTION | | MATRIX METAL (ALLOY NUMBER ACCORDING TO AA) | SHORT INORGANIC FIBER-REINFORCED METAL COMPOSITE | | |
|---|---|---|---|---|---|---|---|
| | | AQUEOUS SOLUTION OF HIGH POLYMER BINDER | SHORT INORGANIC FIBERS | | TENSILE STRENGTH $N/m^2 \times 10^8$ $(Kg/mm^2)$ | ELONGATION (%) | BRINELL HARDNESS |
| COMPOSITES OF THE INVENTION | 1 | AQUEOUS SOLUTION OF PVA: 2 | SiC WHISKERS: 300 g | 6061 | 4.9 (50) | 4.0 | 150 |
| | 2 | AQUEOUS SOLUTION OF PVA: 2 | SiC WHISKERS: 300g | 7475 | 6.9 (70) | 1.5 | 190 |
| | 3 | AQUEOUS SOLUTION OF PVA: 2 | $Si_3N_4$ WHISKERS: 300 g | 2024 | 5.6 (57) | 2.5 | 160 |
| | 4 | AQUEOUS SOLUTION OF MC: 4 | $Si_3N_4$ WHISKERS: 300 g | 6061 | 4.6 (47) | 4.5 | 145 |
| | 5 | AQUEOUS SOLUTION OF MC: 4 | SiC WHISKERS: 300 g | 2014 | 5.9 (60) | 2.0 | 170 |
| | 6 | AQUEOUS SOLUTION OF MC: 4 | SiC WHISKERS: 300 g | 7475 | 7.0 (71) | 1.6 | 193 |
| COMPARATIVE COMPOSITES | 1 | SiC WHISKERS: 150 g/kg | | 6061 | 2.7 (28) | 2.5 | 120 |
| | 2 | $Si_3N_4$ WHISKERS: 150 g/kg | | 2024 | 4.4 (45) | 3.0 | 150 |
| | 3 | SiC WHISKERS: 150 g/kg | | 2024 | 4.4 (45) | 3.0 | 150 |

It will be learned from Table that the composites Nos. 1-6 of the invention are homogeneous and have high strength by virtue of their structure wherein the short inorganic fibers formed of whiskers are homogeneously distributed in the molten metal of the aluminum alloy, in a state free of breakage and damage. On the other hand, the comparative composites Nos. 1-3 manufactured by the conventional method which requires operation of agitating the molten metal and whiskers show low strength due to unhomogeneous distribution of the whiskers in the molten metal, low wettability thereof, as well as to breakage and damage thereof during the agitating operation.

**Claims**

1. A method of manufacturing a fiber-reinforced metal composite, comprising the steps of :
    (a) blending together an aqueous solution of a high polymer binder and inorganic fibers with lengths in a range of from 10 to $10^4$ μm ;
    (b) charging the resulting blend into a water-absorbent former having a cavity of a desired shape ;
    (c) soaking said charged blend in said former to dehydrate the blend and convert the blend into a porous pre-form ;
    (d) preheating said porous pre-form to completely remove said high polymer binder therefrom ;
    (e) establishing around said preheated porous pre-form a mold having a cavity of a desired shape ;
    (f) charging a molten metal into said mold cavity ;
    (g) applying immediate pressure to said molten metal to cause said molten metal to penetrate into said pre-form ; and
    (h) reducing the temperature of the pre-form to cause said molten metal to solidify under pressure.

2. A method as claimed in claim 1, wherein said inorganic fibers are selected from silicon carbide (SiC) and silicon nitride ($Si_3N_4$) and have a diameter of from $10^{-1}$ to $5 \times 10^2$ μm.

3. A method as claimed in claim 1 or 2, wherein said blend is dried in said step (d) for a period of from 1 to 48 hours and at a temperature within a range of from room temperature to 300 °C.

4

4. A method as claimed 1, 2 or 3 wherein said porous pre-form subjected to said step (e) has a bulk density of from 160 to 590 kg/m³ (0.16-0.59 g/cm³).

5. A method as claimed in any one of the preceding claims, further including the step of sintering said porous pre-form at a temperature within a range from 800 to 1 500 °C, immediately following said step (e).

6. A method as claimed in any one of the preceding claims, wherein said porous pre-form is preheated in said step (d) at a temperature within a range of from 400 to 800 °C.

7. A method as claimed in any one of the preceding claims further including the step of reducing the internal pressure within said mold to a pressure within a range of from 0.133 to 0.93 Pa ($10^{-3}$ to $7 \times 10^{-1}$ torr), immediately before said step (g).

8. A method as claimed in any one of the preceding claims, wherein said molten metal is selected from A1, Mg and an alloy thereof.

9. A method as claimed in any one of the preceding claims, wherein said molten metal has a temperature within a range of from 650 to 850 °C.

10. A method as claimed in any one of the preceding claims, wherein said pressure of said step (g) is within a range of from 1.98 to $14.7 \times 10^7$ N/m² (200 to 1 500 kg/cm²).

11. A method as claimed in any one of the preceding claims, wherein said fibers are present in an amount of from 10 to 30 %.

12. A method as claimed in claim 11, wherein said fibers are present in an amount from 15 to 30 %.

13. A method as claimed in any one of the preceding claims, wherein said high polymer binder in a compound selected from ethylene oxide polymer, water soluble urethane, polyvinyl alcohol, methylcellulose, carboxymethylcellulose, and nitrocellulose.

14. A method as claimed in claim 2, or any one of claims 3 to 13 as dependent on claim 2, wherein said fibers have a diameter of from 0.1 to 1.0 $\mu$m and a length of from 10 to 200 $\mu$m.

15. A method as claimed in any one of the preceding claims, further including the steps of subjecting said metal composite to machining to a finished form after said step (h), and subjecting the machined metal composite to hot metal working.

## Patentansprüche

1. Verfahren zur Herstellung einer faserverstärkten Metallzusammensetzung, bestehend aus folgenden Schritten:

a) Vermischen einer wässrigen Lösung eines hochmolekularen Binders und inorganischer Fasern mit Längen im Bereich zwischen 10 und $10^4$ $\mu$,

b) Abgabe der sich ergebenden Vermischung in eine wasserabsorbierende Form, welche einen Hohlraum mit der gewünschten Konfiguration aufweist,

c) Aufsaugenlassen der in die Form eingeschütteten Mischung zur Dehydrierung und Umwandlung in eine poröse Vorform,

d) Vorheizen der porösen Vorform, um den hochmolekularen Binder vollkommen zu entfernen,

e) Herstellung um die vorerhitzte poröse Vorform herum eine Form mit einem der gewünschten Konfiguration entsprechenchen Hohlraum,

f) Abgabe von geschmolzenem Metall in den Hohlraum der Form,

g) Aufbringung eines Druckes auf das geschmolzene Metall, so daß dasselbe in die Vorform eindringt und

h) Reduzierung der Temperatur der Vorform, so daß das geschmolzene Metall unter Druck zur Erstarrung gelangt.

2. Verfahren nach Anspruch 1, dadurch gekennzeichnet, daß die inorganischen Fasern aus der Gruppe von Siliziumcarbid (SiC) und Siliziumnitrid (Si₃N₄) gewählt sind und einen Durchmesser von $10^{-1}$ bis $5 \times 10^2$ $\mu$ aufweisen.

3. Verfahren nach Anspruch 1 oder 2, dadurch gekennzeichnet, daß die Mischung während des Verfahrensschrittes d) während eines Zeitraums zwischen 1 und 48 Stunden und bei einer Temperatur zwischen Raumtemperatur und 300 °C getrocknet wird.

4. Verfahren nach Anspruch 1, 2 oder 3, dadurch gekennzeichnet, daß die dem Verfahrensschritt e) ausgesetzte poröse Vorform eine Massendichte zwischen 160 und 590 kg/m³ (0,16-0,59 g/cm³) aufweist.

5. Verfahren nach einem der vorhergehenden Ansprüche, dadurch gekennzeichnet, daß zusätzlich unmittelbar nach dem Verfahrensschritt e) die poröse Vorform bei einer Temperatur zwischen 800 und 1 500 °C gesintert wird.

6. Verfahren nach einem der vorhergehenden Ansprüche, dadurch gekennzeichnet, daß die poröse Vorform während des Verfahrensschrittes d) auf eine Temperatur im Bereich zwischen 400 und 800 °C vorgewärmt wird.

7. Verfahren nach einem der vorhergehenden Ansprüche, dadurch gekennzeichnet, daß unmittelbar vor dem Verfahrensschritt g) der Innendruck innerhalb der Form auf einen Wert im Bereich zwischen 0,133 und 0,93 Pa ($10^{-3}$ bis $7 \times 10^{-1}$ torr) reduziert wird.

8. Verfahren nach einem der vorhergehenden Ansprüche, dadurch gekennzeichnet, daß das geschmolzene Metall aus der Gruppe von Metallen Al, Mg oder Legierungen derselben gewählt ist.

9. Verfahren nach einem der vorhergehenden Ansprüche, dadurch gekennzeichnet, daß das geschmolzene Metall eine Temperatur im Bereich zwischen 650 und 850 °C aufweist.

10. Verfahren nach einem der vorhergehenden Ansprüche, dadurch gekennzeichnet, daß der innerhalb des Verfahrensschrittes g) vorhandene Druck innerhalb des Bereiches zwischen 1,98 und 14,7 × 10⁷ N/m² (200 bis 1 500 kg/cm²) beträgt.

11. Verfahren nach einem der vorhergehenden Ansprüche, dadurch gekennzeichnet, daß der Faseranteil im Bereich zwischen 10 und 30 % liegt.

12. Verfahren nach Anspruch 11, dadurch gekennzeichnet, daß der Faseranteil im Bereich zwischen 15 und 30 % liegt.

13. Verfahren nach einem der vorhergehenden Ansprüche, dadurch gekennzeichnet, daß das hochmolekulare Bindemittel eine Verbindung aus der Gruppe von Äthylenoxidpolymer, wasserlöslichem Urethan, Polyvinylalkohol, Methylcellulose, Carboxymethylcellulose und Nitrocellulose gewählt ist.

14. Verfahren nach Anspruch 2, oder einem der davon abhängigen Ansprüche 3 bis 13, dadurch gekennzeichnet, daß die Fasern einen Durchmesser zwischen 0,1 und 1,0 μ und eine Länge zwischen 10 und 200 μ aufweisen.

15. Verfahren nach einem der vorhergehenden Ansprüche, dadurch gekennzeichnet, daß nach Durchführung des Verfahrensschrittes h) die Metallverbindung einem Bearbeitungsvorgang ausgesetzt wird, um auf diese Weise eine Endform zu bilden, und daß die bearbeitete Metallzusammensetzung einer Heißmetallbearbeitung ausgesetzt wird.

## Revendications

1. Procédé de fabrication d'un produit composite métallique renforcé de fibres, comprenant les stades de :

(a) mélange d'une solution aqueuse d'un liant à base de haut polymère et de fibres minérales ayant des longueurs comprises entre 10 et 10⁴ μm ;

(b) chargement du mélange obtenu dans un dispositif de mise en forme absorbant l'eau et ayant une empreinte de la forme souhaitée ;

(c) imprégnation du dispositif de mise en forme par le mélange chargé, pour déshydrater le mélange et le transformer en une ébauche poreuse ;

(d) préchauffage de l'ébauche poreuse pour en éliminer complètement le liant à base de haut polymère ;

(e) mise autour de la préforme poreuse préchauffée d'un moule ayant une empreinte de la forme souhaitée ;

(f) chargement d'un métal fondu dans l'empreinte du moule ;

(g) application immédiate d'une pression au métal fondu pour le faire pénétrer dans l'ébauche ; et

(h) abaissement de la température de l'ébauche pour provoquer la solidification sous pression du métal fondu.

2. Procédé suivant la revendication 1, dans lequel les fibres minérales sont choisies parmi le carbure de silicium (SiC) et le nitrure de silicium (Si₃N₄) et ont un diamètre de 10⁻¹ à 5 × 10² μm.

3. Procédé suivant la revendication 1 ou 2, qui consiste à sécher le mélange au stade (d) pendant une durée de 1 à 48 heures et à une température allant de la température ambiante à 300 °C.

4. Procédé suivant la revendication 1, 2 ou 3, dans lequel l'ébauche poreuse soumise au stade (e) a une masse volumique apparente de 160 à 590 kg/m³ (0,16 à 0,59 g/cm³).

5. Procédé suivant l'une quelconque des revendications prédédentes, comprenant en outre le stade de frittage de l'ébauche poreuse à une température comprise entre 800 et 1 500 °C, immédiatement après le stade (e).

6. Procédé suivant l'une quelconque des revendications précédentes, qui consiste à préchauffer l'ébauche poreuse au stade (d), à une température comprise entre 400 et 800 °C.

7. Procédé suivant l'une quelconque des revendications précédentes, comprenant en outre le stade de diminution de la pression interne dans le moule, jusqu'à une pression comprise entre 0,133 et 0,93 Pa (10⁻³ à 7 × 10⁻¹ torr), immédiatement avant le stade (g).

8. Procédé suivant l'une quelconque des revendications précédentes, dans lequel le métal fondu est choisi parmi Al, Mg, et leurs alliages.

9. Procédé suivant l'une quelconque des revendications précédentes, dans lequel le métal fondu a une température comprise entre 650 et 850 °C.

10. Procédé suivant l'une quelconque des revendications précédentes, dans lequel la pression au stage (g) est comprise entre 1,98 à 14,7 × 10⁷ N/m² (200 à 1 500 kg/cm²).

11. Procédé suivant l'une quelconque des revendications précédentes, dans lequel les fibres représentent une quantité de 10 à 30 %.

12. Procédé suivant la revendication 11, dans lequel les fibres représentent en une quantité de 15 à 30 %.

13. Procédé suivant l'une quelconque des revendications précédentes, dans lequel le liant à base de

6

haut polymère est un composé choisi parmi les polymères d'oxyde d'éthylène, un uréthanne soluble dans l'eau, l'alcool polyvinylique, la méthylcellulose, la carboxyméthylcellulose et la nitrocellulose.

14. Procédé suivant la revendication 2 ou l'une quelconque des revendications 3 à 13, telles que rattachées à la revendication 2, dans lequel les fibres ont un diamètre de 0,1 à 1,0 $\mu$m et une longueur de 10 à 200 $\mu$m.

15. Procédé suivant l'une quelconque des revendications précédentes, comprenant en outre les stades de soumission du produit composite métallique à un usinage pour obtenir un produit fini après le stade (h), et de soumission du produit composite métallique usiné à un façonnage à chaud du métal.